# FASCICULE DE BREVET EUROPEEN

(11) **EP 1 095 692 B1**
(45) Date de publication et mention de la délivrance du brevet: **10.01.2007**
(21) Numéro de dépôt: 00402992.2
(22) Date de dépôt: 27.10.2000
(51) Int. Cl.: B01D 53/75, B01D 53/92, B01D 53/60, B01D 53/62, B01D 53/72, B61C 5/04, B01D 53/94, B01D 53/90, B01D 53/14, B01D 47/02, B01D 53/86

(54) **Procédé et installation d'épuration des gaz d'échappement de moteurs thermiques**
Verfahren und Anlage zur Reinigung von Abgasen einer Brennkraftmaschine
Process and installation for purification of exhaust gases from internal combustion engines

(30) Priorité: 29.10.1999 FR 9913630
(43) Date de publication de la demande: 02.05.2001
(73) Titulaire: TSO, 77500 Chelles (FR)
(72) Inventeur: Delpy, Jean-Marie, 77400 Lagny sur Marne (FR); Séverin, Eric, 91790 Boissy sous Saint-Yon (FR)
(74) Mandataire: Boutin, Antoine

(56) Documents cités:
- DE-A- 3 608 292
- DE-A- 3 733 501
- US-A- 3 599 427
- US-A- 3 846 981
- PATENT ABSTRACTS OF JAPAN vol. 1995, no. 08, 29 septembre 1995 (1995-09-29) & JP 07 112117 A (MITSUBISHI HEAVY IND LTD), 2 mai 1995 (1995-05-02)

## Description

L'invention concerne un procédé et une installation d'épuration des gaz d'échappement de moteurs thermiques, et plus spécialement de moteurs Diesel travaillant en atmosphère confinée.

L'invention s'applique notamment à l'épuration des gaz d'échappement des locotracteurs de trains de travaux ou engins travaillant sur des voies souterraines ou dans des tunnels.

Le but de l'invention est de procurer une chaîne d'épuration des gaz d'échappement qui, par rapport aux installations actuelles, présente des performances très nettement améliorées et ont un coût de fonctionnement faible.

L'invention consiste en un procédé qui met en oeuvre l'exécution en séquence des opérations suivantes :
- réchauffage des gaz d'échappement jusqu'à une température comprise entre 300°C et 450°C, et de préférence de l'ordre de 350°C à 360°C,
- traitement des oxydes de carbone et des hydrocarbures par oxydation catalytique,
- adjonction d'un réactif tel que l'urée ou l'ammoniaque,
- traitement des oxydes d'azote par réduction catalytique,
- refroidissement du flux gazeux,
- traitement des oxydes de souffre par mélange du flux gazeux avec de l'eau dans un laveur à effet venturi,
- barbotage du flux gazeux dans l'eau,
l'adjonction de réactif étant régulée en fonction de la teneur en oxyde d'azote des gaz d'échappement produits par le moteur.

Une telle chaîne d'épuration permet d'obtenir sur les gaz d'échappement de moteur Diesel de locotracteurs, à tous les régimes et spécialement au ralenti, avec une perte de puissance réduite au minimum, une efficacité de l'ordre d'au moins 80 à 90 % pour le monoxyde de carbone, les hydrocarbures, les oxydes d'azotes et les oxydes de soufres. Elle évite le recours au charbon actif dont le coût d'exploitation est très élevé.

Selon d'autres caractéristiques de l'invention :
- la régulation s'effectue au moyen d'un signal de sortie obtenu par comparaison du régime instantané du moteur avec la courbe théorique des émissions d'oxyde d'azote dudit moteur en fonction de sa vitesse de rotation pour délivrer un signal de sortie sur un régulateur d'injection ;
- on utilise pour le réchauffage un brûleur à fioul ; pour le traitement des oxydes de carbone et des hydrocarbures, un réacteur à structure en nid d'abeille à support métallique contenant du platine ; pour le traitement des oxydes d'azote, un réacteur à structure en nid d'abeille à support métallique contenant du pentoxyde de vanadium.

L'invention concerne également une installation d'épuration spécialement conçue pour la mise en oeuvre du procédé ci-dessus sous forme d'un wagon attelable à un locotracteur muni de moyens d'asservissement entre le régime du moteur du locotracteur et l'alimentation en réactif et de moyens de commande automatique de la mise en service et arrêt de l'installation depuis la cabine de conduite du locotracteur.

Plus particulièrement, l'objet de l'invention est une installation, dans laquelle sont groupés en séquence, depuis l'admission des gaz d'échappement jusqu'à leur évacuation, des moyens de réchauffage du flux gazeux, un réacteur d'oxydation catalytique des oxydes de carbones et des hydrocarbures, un dispositif d'injection de réactif, un réacteur de réduction catalytique des oxydes d'azote, un échangeur de chaleur, un laveur des oxydes de soufre par effet venturi et un réservoir d'eau de barbotage, et qui comporte un automate programmé pour la régulation de l'injection de réactif à partir d'une prise d'information sur le régime instantané de rotation du moteur émettant les gaz à épurer.

Selon d'autres caractéristiques de l'invention :
- l'automate programmé est apte à comparer le régime instantané du moteur avec la courbe théorique des émissions en oxyde d'azote du moteur en fonction de sa vitesse de rotation pour délivrer un signal de sortie sur un régulateur d'injection ;
- l'installation comporte des moyens de bipasse disposés à l'admission des gaz d'échappement dans l'installation.
- l'installation comporte des moyens de commande à distance des moyens de bipasse.
- l'installation est disposée sur un wagon de chemin de fer attelable à un locotracteur et elle comporte des moyens de liaison souple entre le tuyau d'échappement du locotracteur et l'admission des gaz de l'installation.

L'invention sera mieux comprise et ses caractéristiques ressortiront de la description ci-après d'une telle installation en référence aux dessins annexés sur lesquels :
- la figure 1 est une vue latérale schématique d'un locotracteur attelé avec un wagon portant une installation d'épuration conforme à l'invention, et
- la figure 2 est une vue de dessus de l'ensemble roulant montré à la figure 1.

Sur les figures on voit un locotracteur 1 doté d'un moteur Diesel d'un type usuellement utilisé dans les travaux ferroviaires, tel que celui connu sous la référence 3512 de marque CATERPILLAR. A ce locotracteur 1 est attelé un wagon-plateforme 2 qui porte l'installation d'épuration qui va être décrite plus en détail.

Sur le locotracteur 1, les gaz d'échappement du moteur sont recueillis par un tuyau rigide 3 qui s'étend au-dessus du locotracteur horizontalement jusqu'à une potence 4 située près de l'arrière du locotracteur. A son extrémité libre, le tuyau 3 se raccorde à une manche souple 5 dont l'autre extrémité est raccordée à une boîte 6 d'admission des gaz dans l'installation d'épuration.

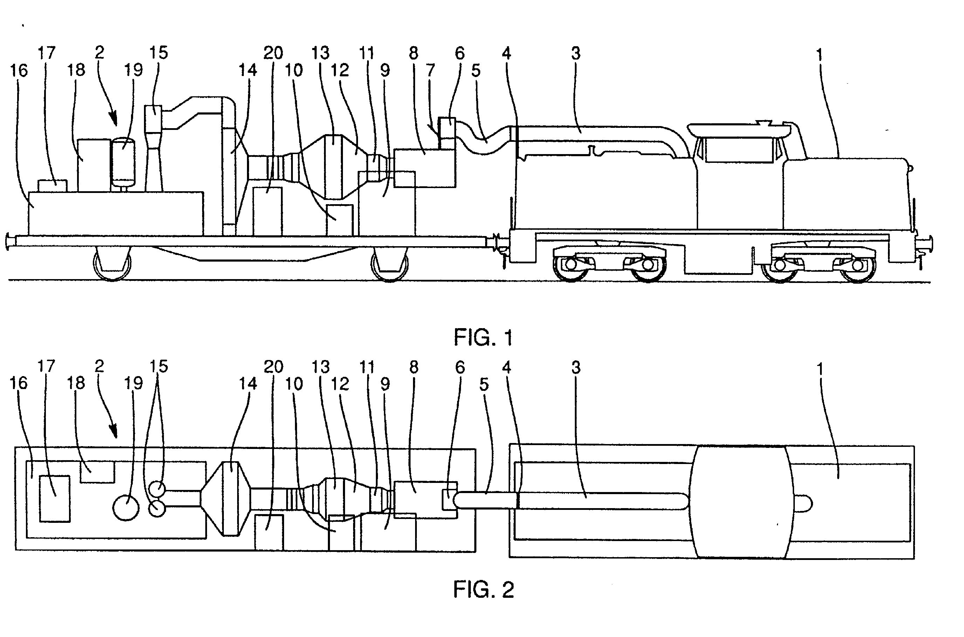

Sur la figure 1 on voit que la boîte 6 comporte un dispositif de bipasse sous forme d'un volet 7 dont l'ouverture permet le rejet des gaz de combustion directement à l'air libre lorsque le locotracteur 1 est en service dans un lieu non confiné. Des moyens de radio-commande installés dans la cabine de conduite du locotracteur 1 permettent au conducteur de commander à distance la mise en service de l'installation et en particulier l'ouverture ou la fermeture du volet 7 sans quitter son poste de conduite et sans arrêter son train.

Après leur admission, les gaz d'échappement passent d'abord dans un réchauffeur 8 équipé d'un brûleur à fioul et muni d'une sonde thermique qui commande le fonctionnement du brûleur pour réchauffer les gaz d'échappement jusqu'à une température de consigne comprise entre 300° et 400°C.

Ce réchauffement a pour objet de porter les gaz à une température suffisante pour permettre les réactions catalytiques qui vont suivre.

En pratique, les gaz d'échappement sont admis dans l'installation à une température d'environ 150° à 170° et sont portés par le réchauffeur à une température d'environ 350° à 360°C.

Le réchauffeur est classiquement constitué d'un brûleur, d'une pompe, d'un ventilateur d'air de combustion, d'une vanne de régulation d'air motorisée et d'une armoire de commande. Tous ces dispositifs sont bien connus et ne seront pas décrits en détail, seuls étant symbolisés sur les dessins les carrosseries du réchauffeur 8, et de son armoire de commande 9.

A la sortie du réchauffeur 8 les gaz entrent dans un premier réacteur 11 d'oxydation catalytique du monoxyde de carbone et des hydrocarbures.

Le réacteur est, de manière connue en soi constitué par une structure métallique en nid d'abeille imprégnée de platine.

L'oxydation catalytique traite le monoxyde de carbone (CO), les aldéhydes (R-CHO) et les hydrocarbures (HC). Les gaz en passant à travers le réacteur se transforment en eau et en gaz carbonique de la façon suivante :
- Monoxyde de carbone : 2CO + O₂ = 2 CO₂
- Aldéhydes : HCHO + O₂ = CO₂ + H₂O
- Hydrocarbures : CH₄+2O₂ = CO₂+2H₂O

De tels réacteurs d'oxydation catalytique sont disponibles sur le marché sous la marque commerciale JOHNSON MATTEY.

A la sortie de ce premier réacteur, les gaz sont soumis à une pulvérisation d'un réactif tel que l'urée ou l'ammoniaque dans une chambre 12 avant de passer dans un second réacteur 13 de réduction catalytique traitant les oxydes d'azote (NO, NO₂). Le réservoir du réactif est référencé 20 sur les figures.

Le second réacteur, de type connu sous la dénomination commerciale SCR (Selective Catalytic Reduction) JOHNSON MATTEY, est constitué d'une structure métallique en nid d'abeille imprégnée de pentoxyde de vanadium.

Les gaz d'échappement, préalablement mélangés au réactif pulvérisé, en l'espèce l'urée, se transforment en passant dans le réacteur en azote et en eau de la manière suivante :
. monoxyde d'azote : 6 NO+3 NH₂-CO-NH₂+3/2 O₂ = 6 N₂+6 H₂ O+3 CO₂
. dioxyde d'azote : 2 NO₂+2 NH₂-CO-NH₂+ O₂ = 3 N₂+4H₂O+2 CO₂

En variante, on peut utiliser comme réactif de l'ammoniaque plutôt que de l'urée. Dans ce cas la réaction catalytique se fera de la manière suivante :
. monoxyde d'azote : 4 NO+ 4 NH₃+ O₂ =4 N₂+ 6 H₂O
. dioxyde d'azote : 6 NO₂+8 NH₃ = 7 N₂+12 H₂O

Les réactions nécessitent une température comprise entre 350 et 450° de la ligne catalytique.

L'invention prévoit de réguler l'injection du réactif en fonction de la teneur en oxyde d'azote des gaz d'échappement produits par le moteur Diesel, afin d'optimiser l'efficacité du réacteur 13, de traitement des oxydes d'azote.

A cet effet, le débit d'injection du réactif est commandé par un automate programmé qui compare le régime instantané du moteur Diesel avec la courbe théorique des émissions d'oxyde d'azote dudit moteur en fonction de sa vitesse de rotation pour délivrer un signal de sortie dur le régulateur d'injection. Les références 18 et 19 indiquent respectivement le compresseur et la réserve d'air du dispositif d'injection.

Il est important que le réacteur de traitement des oxydes d'azote 13 soit placé dans la ligne catalytique derrière le réacteur de traitement des oxydes de carbone et des hydrocarbures 11. En effet, si cette disposition était inversée, on risquerait une production accidentelle d'oxydes d'azote par le réacteur 11 en cas de déréglage de l'injection d'urée.

A la sortie du réacteur 13, les gaz sont refroidis jusqu'à une température d'environ 170°C par passage dans un échangeur de chaleur 14 constitué par un ensemble de tubes traversant une structure de dissipation en nid d'abeille et soumis à une ventilation forcée.

A la sortie de l'échangeur 14 les gaz passent dans un laveur à effet venturi 15 dans lequel ils sont soumis à un mélange très poussé avec de l'eau en provenance d'un réservoir 16, ce qui a pour effet de dissoudre les oxydes de soufre (SOₓ) dans l'eau.

Dans l'exemple représenté, on voit sur la figure 2 que le laveur a effet venturi 15 est constitué par deux tours jumelées mais cette disposition n'est pas limitative.

Dans le réservoir 16, l'eau est neutralisée par adjonction de soude en provenance d'un réservoir 10.

Les gaz d'échappement après barbotage dans la cuve 16 sont évacués à l'air libre par la cheminée d'évacuation 17.

L'invention n'est pas limitée au mode de réalisation qui vient d'être décrit, on pourrait par exemple remplacer les moyens de réchauffage par brûleur à fioul à des moyens de réchauffage électrique ou au gaz.

De même l'installation décrite est montée sur un wagon, mais elle pourrait sans sortir du cadre de l'invention et selon ses applications particulières être placée sur une remorque routière, un conteneur ou être configurée en poste fixe.

## Revendications

1. Procédé d'épuration des gaz d'échappement de moteurs thermiques, dans lequel les étapes ci-après sont exécutées en séquence :
- réchauffage des gaz d'échappement jusqu'à une température comprise entre 300°C et 450°C, et de préférence de l'ordre de 350°C à 360°C,
- traitement des oxydes de carbone et des hydrocarbures par oxydation catalytique,
- adjonction d'un réactif tel que l'urée ou l'ammoniaque,
- traitement des oxydes d'azote par réduction catalytique,
- refroidissement du flux gazeux,
- traitement des oxydes de souffre par mélange du flux gazeux avec de l'eau dans un laveur à effet venturi,
- barbotage du flux gazeux dans l'eau,
l'adjonction de réactif étant régulée en fonction de la teneur en oxyde d'azote des gaz d'échappement produits par le moteur.

2. Procédé selon la revendication 1, **caractérisé en ce que** la régulation s'effectue au moyen d'un signal de sortie obtenu par comparaison du régime instantané du moteur avec la courbe théorique des émissions d'oxyde d'azote dudit moteur en fonction de sa vitesse de rotation pour délivrer un signal de sortie sur un régulateur d'injection.

3. Procédé selon la revendication 1 ou 2, **caractérisé en ce que** l'on utilise :
- pour le réchauffage un brûleur à fioul,
- pour le traitement des oxydes de carbone et des hydrocarbures, un réacteur à structure en nid d'abeille à support métallique contenant du platine,
- pour le traitement des oxydes d'azote, un réacteur à structure en nid d'abeille à support métallique contenant du pentoxyde de vanadium.

4. Installation pour la mise en oeuvre du procédé selon l'une quelconque des revendications précédentes, dans laquelle sont groupés en séquence, depuis l'admission des gaz d'échappement jusqu'à leur évacuation, des moyens de réchauffage du flux gazeux (8), un réacteur (11) d'oxydation catalytique des oxydes de carbones et des hydrocarbures, un dispositif (12, 20) d'injection de réactif, un réacteur de réduction catalytique (13) des oxydes d'azote, un échangeur de chaleur (14), un laveur des oxyder de soufre par effet venturi (15) et un réservoir d'eau de barbotage (16), et qui comporte un automate programmé pour la régulation de l'injection de réactif à partir d'une prise d'information sur le régime instantané de rotation du moteur émettant les gaz à épurer.

5. Installation selon la revendication 4, **caractérisée en ce que** l'automate programmé est apte à comparer le régime instantané du moteur avec la courbe théorique des émissions en oxyde d'azote du moteur en fonction de sa vitesse de rotation pour délivrer un signal de sortie sur un régulateur d'injection.

6. Installation selon la revendication 4 ou 5, **caractérisée en ce qu'**elle comporte des moyens de bipasse (6, 7) disposés à l'admission des gaz d'échappement dans l'installation.

7. installation selon la revendication 6, **caractérisée en ce qu'**elle comporte des moyens de commande à distance des moyens de bipasse (6, 7).

8. Installation selon l'une quelconque des revendications 4 à 7, **caractérisée en ce qu'**elle est disposée sur un wagon de chemin de fer attelable à un locotracteur (1) et **en ce qu'**elle comporte des moyens de liaison souple entre le tuyau d'échappement (3) du locotracteur et l'admission des gaz de l'installation.

## Claims

1. A method for purifying the exhaust gases from heat engines, in which the following steps are performed in sequence:
- heating the exhaust gases to a temperature of between 300°C and 450°C, and preferably of the order of 350°C to 360°C,
- treatment of the carbon oxides and hydrocarbons by catalytic oxidation,
- adding of a reagent such as urea or ammonia,
- treatment of the nitrogen oxides by catalytic reduction,
- cooling of the gas stream,
- treatment of the sulphur oxides by mixing the gas stream with water in a venturi scrubber,
- bubbling the gas stream in water,
the addition of the reagent being regulated according to the content of nitrogen oxide in the exhaust gases produced by the engine.

2. A method according to Claim 1, **characterised in that** the regulation takes place by means of an output signal obtained by comparing the instantaneous state of the engine with the theoretical curve of the nitrogen oxide emissions of said engine as a function of its speed to deliver an output signal to an injection regulator.

3. A method according to Claim 1 or 2, **characterised in that** there is used:
- for the heating, a fuel-oil burner,
- for the treatment of the carbon oxides and the hydrocarbons, a honeycomb-structure reactor with a metallic support containing platinum,
- for the treatment of the nitrogen oxides, a honeycomb-structure reactor with a metallic support containing vanadium pentoxide.

4. An installation for implementing the method according to any one of the preceding claims, in which there are grouped in sequence, from the inlet for the exhaust gases to the outlet therefor, means for heating the gas stream (8), a reactor (11) for catalytic oxidation of the carbon oxides and the hydrocarbons, a device (12, 20) for injecting reagent, a reactor (13) for catalytic reduction of the nitrogen oxides, a heat exchanger (14), a venturi scrubber (15) for the sulphur oxides and a bubbling-water tank (16), and which comprises a controller programmed for regulating the injection of reagent from information about the instantaneous state of the engine emitting the gases to be purified.

5. An installation according to Claim 4, **characterised in that** the programmed controller is capable of comparing the instantaneous state of the engine with the theoretical curve of the nitrogen oxide emissions of the engine as a function of its speed to deliver an output signal to an injection regulator.

6. An installation according to Claim 4 or 5, **characterised in that** it comprises bypass means (6, 7) arranged at the intake of the exhaust gases into the installation.

7. An installation according to Claim 6, **characterised in that** it comprises means for remotely controlling the bypass means (6, 7).

8. An installation according to any one of Claims 4 to 7, **characterised in that** it is located on a rail wagon which can be coupled to a locomotive (1) and **in that** it comprises flexible coupling means between the exhaust pipe (3) of the locomotive and the intake for the gases of the installation.

## Patentansprüche

1. Verfahren zur Reinigung der Abgase von Brennkraftmaschinen, bei dem die folgenden Schritte nacheinander ausgeführt werden:
- Erwärmen der Abgase auf eine Temperatur im Bereich von 300°C bis 450°C und vorzugsweise in der Größenordnung von 350°C bis 360°C,
- Behandeln der Kohlenstoffoxide und der Kohlenwasserstoffe mittels katalytischer Oxidation,
- Zugabe eines Reagens, wie Harnstoff oder Ammoniak,
- Behandeln der Stickoxide mittels katalytischer Reduktion,
- Abkühlen des Gasstroms,
- Behandeln der Schwefeloxide durch Mischen des Gasstroms mit Wasser in einem Venturi-Wascher,
- Einblasen des Gasstroms in das Wasser,
wobei die Zugabe des Reagenzes abhängig vom Stickoxidgehalt der vom Motor erzeugten Abgase reguliert wird.

2. Verfahren nach Anspruch 1, **dadurch gekennzeichnet, daß** die Regulierung mittels eines Ausgangssignals erfolgt, das durch einen Vergleich des momentanen Betriebszustandes des Motors mit der theoretischen Kurve der Stickoxidemissionen des Motors abhängig von dessen Drehzahl erhalten wird, um ein Ausgangssignal für einen Einpritzregler zu liefern.

3. Verfahren nach Anspruch 1 oder 2, **dadurch gekennzeichnet, daß** man
- zum Erwärmen einen Ölbrenner,
- zum Behandeln der Kohlenstoffoxide und der Kohlenwasserstoffe ein Reaktionsgefäß mit Bienenwabenstruktur und einem metallischen Träger, der Platin enthält, und
- zum Behandeln der Stickoxide ein Reaktionsgefäß mit Bienenwabenstruktur und einem metallischen Träger, der Vanadiumpentoxid enthält, verwendet.

4. Anlage zur Durchführung des Verfahrens nach einem der vorhergehenden Ansprüche, bei der vom Einlaß der Abgase bis zu deren Abzug nacheinander angeordnet sind: Mittel zum Erwärmen des Gasstroms (8), ein Reaktionsgefäß (11) zur katalytischen Oxidation der Kohlenstoffoxide und der Kohlenwasserstoffe, eine Vorrichtung (12, 20) zum Einspritzen von Reagens, ein Reaktionsgefäß zur katalytischen Reduktion (13) der Stickoxide, ein Wärmetauscher (14), ein Venturi-Schwefeloxidwascher (15) und ein Sprühwassertank (16), wobei die Anlage einen programmierten Automaten zum Regulieren des Einspritzens von Reagens aufgrund einer Datenerfassung über den momentanen Drehzahlzustand des die zu reinigenden Gase abgebenden Motors umfaßt.

5. Anlage nach Anspruch 4, **dadurch gekennzeichnet, daß** der programmierte Automat in der Lage ist, den momentanen Betriebszustand des Motors mit der theoretischen Kurve der Stickoxid-Emissionen des Motors abhängig von dessen Drehzahl zu vergleichen, um ein Ausgangssignal für einen Einspritzregler zu liefern.

6. Anlage nach Anspruch 4 oder 5, **dadurch gekennzeichnet, daß** sie Bypass-Mittel (6, 7) umfaßt, die am Einlaß der Abgase in die Anlage angeordnet sind.

7. Anlage nach Anspruch 6, **dadurch gekennzeichnet, daß** sie von den Bypass-Mitteln (6, 7) beabstandete Steuermittel aufweist.

8. Anlage nach einem der Ansprüche 4 bis 7, **dadurch gekennzeichnet, daß** sie auf einem an eine Kleinlokomotive (1) ankoppelbaren Eisenbahnwaggon angeordnet ist und Mittel zur nachgiebigen Verbindung zwischen dem Auspuffrohr (3) der Kleinlokomotive und dem Gaseinlaß der Anlage umfaßt.
